# FASCICULE DE BREVET EUROPEEN

(11) **EP 0 299 898 B1**
(45) Date de publication et mention de la délivrance du brevet: **06.10.1993**
(21) Numéro de dépôt: 88450027.3
(22) Date de dépôt: 06.07.1988
(51) Int. Cl.: B01D 46/04

(54) **Procédé de décolmatage automatique de filtre à air à manches et dispositif pour sa mise en oeuvre**
Verfahren und Einrichtung zur automatischen Reinigung von Luftfilterschläuchen
Process and device for automatically cleaning air filter bags

(30) Priorité: 07.07.1987 FR 8709983
(43) Date de publication de la demande: 18.01.1989
(73) Titulaire: Dandy, Jean-Pierre, F-33000 Bordeaux (FR)
(72) Inventeur: Dandy, Jean-Pierre, F-33000 Bordeaux (FR)
(74) Mandataire: Thébault, Jean-Louis

(56) Documents cités:
- DE-A- 3 203 112
- DE-C- 875 908
- FR-A- 1 512 109
- US-A- 4 022 595

## Description

La présente invention a trait au décolmatage de filtres à air à manche et plus particulièrement de filtres à cellules accouplées en parallèle et comprenant chacune un certain nombre de manches filtrantes.

On sait que ces manches doivent être périodiquement décolmatées pour retrouver leur capacité de filtrage.

Divers systèmes sont connus pour effectuer une telle régénération et principalement le secouage mécanique, l'injection séquentielle d'air à forte pression et l'établissement d'un flux d'air de rinçage à travers la paroi des manches en sens inverse du sens de filtrage par une mise en dépression.

Malheureusement ces systèmes sont sujets à de nombreuses critiques car leur fiabilité est souvent aléatoire et les capacités de filtration sont, par voie de conséquence, réduites.

Les débits d'air des appareils sont en général inférieurs aux performances annoncées du fait de l'augmentation des pertes de charge dans le temps due à ces problèmes techniques.

Parallèlement, les rejets à l'atmosphère sont augmentés après un certain temps d'utilisation car les médias filtrants subissent des contraintes et les tissus ou les fibres des feutres constitutifs sont distendus.

Parmi les dispositifs connus à injection séquentielle d'air sous pression, on peut citer celui décrit dans le document FR-A-74.41654 déposé au nom du demandeur. Ce dispositif est un séparateur cyclonique travaillant soit en pression, soit en dépression et comportant une cartouche filtrante à cellules parallèles équipées chacune de plusieurs manches filtrantes, ladite cartouche étant munie d'un dispositif de décolmatage automatique comprenant un ventilateur à distributeur d'air rotatif envoyant une contre-pression dans les manches par des tuyères profilées.

Parmi les dispositifs connus utilisant le principe d'un rinçage à l'aide d'une mise en dépression, on peut citer ceux décrits dans les documents FR-A-74.22562 et EP-A-0102417.

En bref, ces dispositifs sont constitués d'un corps de filtrage cylindrique cloisonné en un certain nombre de cellules comportant chacune plusieurs manches filtrantes. De l'air poussièreux est envoyé sous pression dans ledit corps de filtrage et un dispositif de décolmatage rotatif permet de décolmater successivement toutes les cellules en déconnectant momentanément chacune d'elles de la source d'air poussièreux pour la connecter à une source de vide.

De tels systèmes de décolmatage, outre les inconvénients rappelés plus haut, sont complexes et donc coûteux, nécessitent un système complémentaire, soit de génération de contre-pression, soit de succion et de filtrage, sont sujets à panne et impliquent un entretien régulier.

La présente invention a précisément pour but d'améliorer ces dispositifs de décolmatage automatique successif des différentes cellules filtrantes et en particulier de simplifier le système de décolmatage, de le rendre plus efficace et plus fiable et également de réduire la consommation d'énergie ainsi que la pollution atmosphérique.

A cet effet, l'invention a pour objet un procédé de décolmatage automatique pour filtre à air à manches dans lequel on met en dépression une enceinte de filtrage comprenant une pluralité de cellules en parallèle comportant chacune au moins une manche filtrante, on admet l'air à dépoussiérer à une extrémité de l'enceinte, on extrait l'air dépoussiéré à l'autre extrémité après traversée de la paroi des manches filtrantes et on effectue un décolmatage des cellules les unes après les autres, ledit procédé étant caractérisé en ce que pour chaque cellule et pendant un temps prédéterminé, on isole de la source de dépression l'extrémité aval des manches filtrantes de ladite cellule et, simultanément, on met en contact l'air atmosphérique avec les surfaces aval des manches en sorte de créer dans la paroi de ces dernières un rinçage en sens inverse du sens normal de filtrage.

Un tel procédé permet de réaliser de notables économies d'énergie car le décolmatage ne nécessite pas la génération d'air sous pression puisque c'est l'air atmosphérique, en surpression par rapport à l'intérieur de l'enceinte de filtrage, qui effectue ledit rinçage.

Le procédé est, par ailleurs, économique à deux autres titres : d'une part, il ménage les médias filtrants et leur assure ainsi une meilleure longévité et, d'autre part, il permet de recueillir les poussières de décolmatage dans le circuit de dépoussiérage de l'installation et donc sans avoir à prévoir de circuit de filtrage annexe.

A des fins d'optimisation du procédé, on peut avantageusement programmer le cycle de décolmatage en ne faisant intervenir le décolmatage que lorsque la perte de charge mesurée entre l'entrée et la sortie de l'enceinte de filtrage atteint ou dépasse un seuil prédéterminé réglable.

D'autres caractéristiques et avantages ressortiront de la description qui va suivre de modes de réalisation de dispositifs pour la mise en oeuvre du procédé de l'invention, description donnée à titre d'exemple uniquement et en regard des dessins annexés sur lesquels :
- Figure 1 est une vue schématique en perspective d'un filtre mettant en oeuvre le procédé de l'invention ;
- Figure 2 est une coupe verticale axiale du filtre de la figure 1 ;
- Figure 3 illustre schématiquement un mode de réalisation des moyens de commande du dispositif décolmateur rotatif ;
- Figure 4 est un schéma illustrant le compartimentage interne de l'installation de la figure 1, et
- Figure 5 est un schéma du compartimentage interne d'une enceinte de filtrage cylindrique d'un autre filtre également conforme à l'invention.

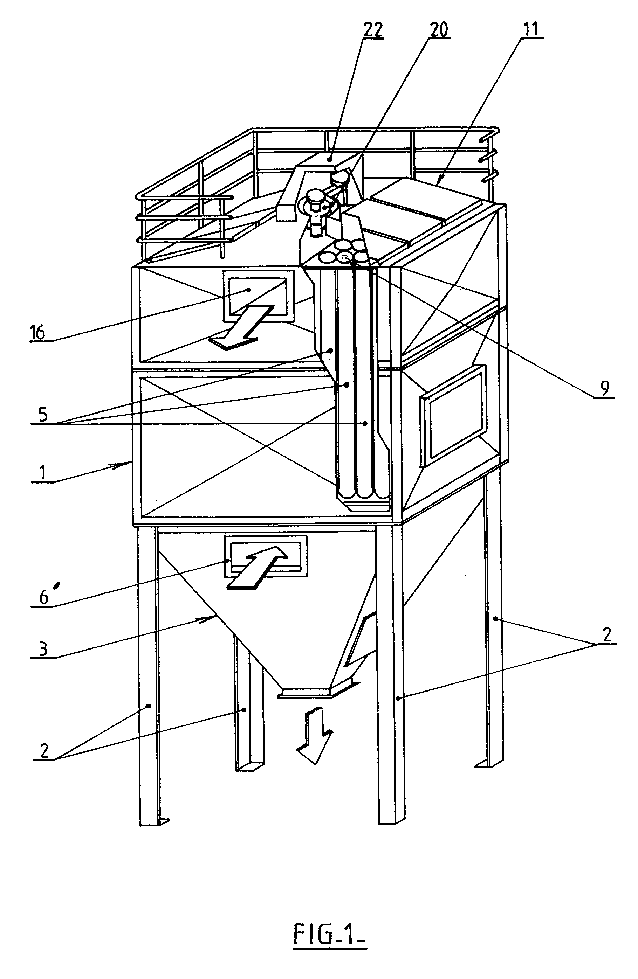

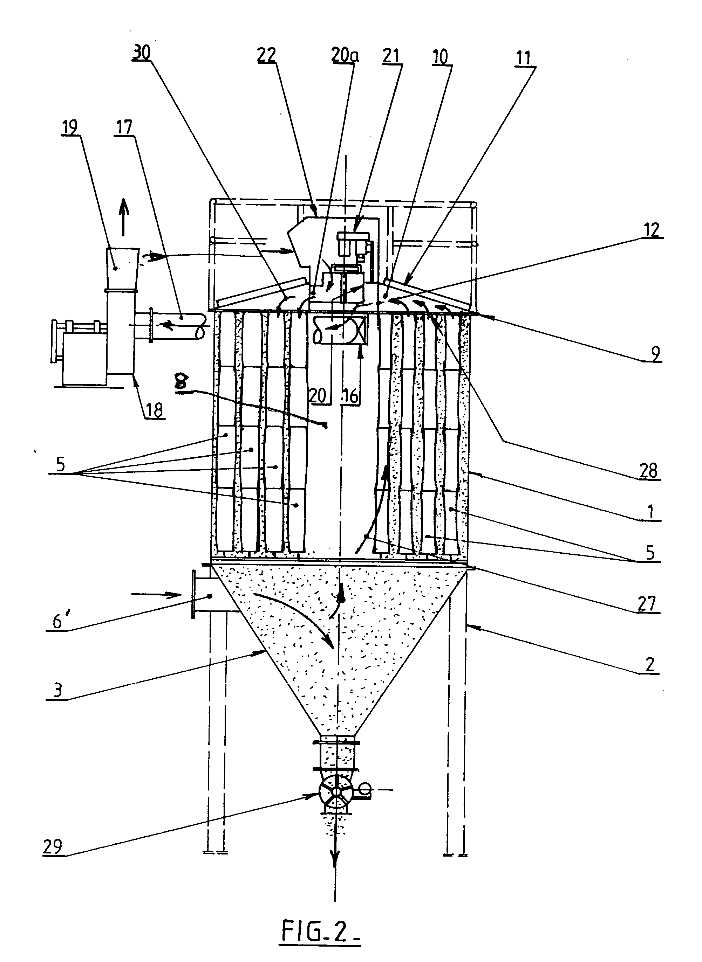

L'installation représentée aux figures 1 et 2 est un filtre à enceinte de filtrage parallélépipédique.

Le filtre comprend un corps 1 de forme générale sensiblement cubique porté par quatre pieds 2 et sous lequel est disposée une trémie de réception 3 en forme de tronc de pyramide renversée et munie d'une écluse d'air rotative ou d'un sas (non représenté en figure 1).

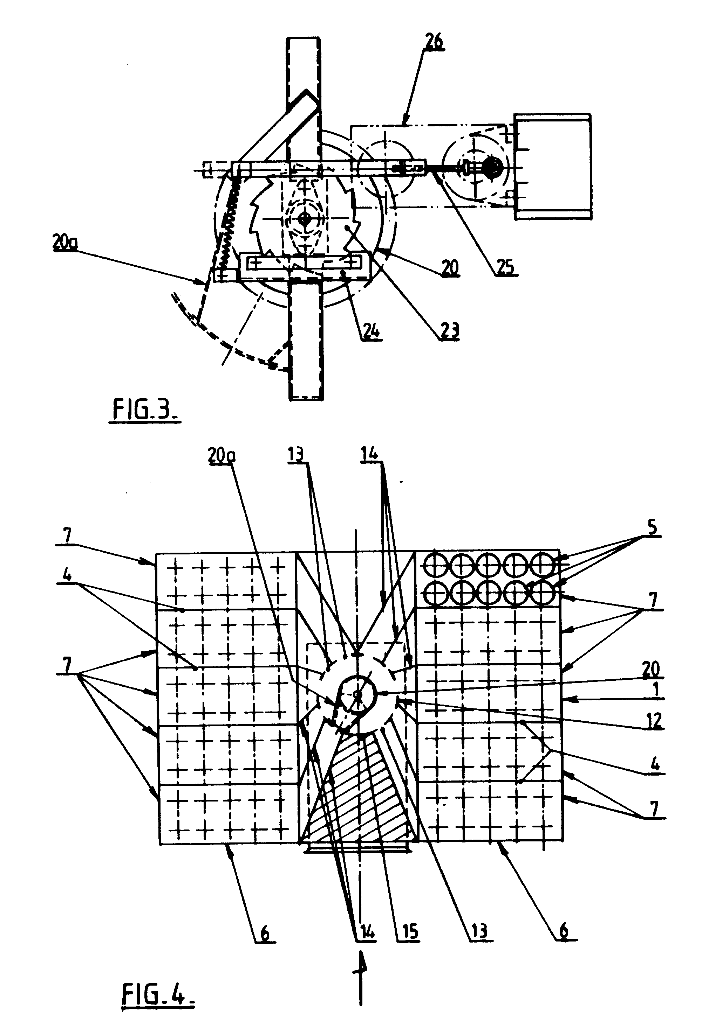

L'intérieur du corps 1 est compartimenté en cellules à l'aide de cloisons verticales 4 (figure 4). Dans chaque cellule sont tendues côte à côte verticalement entre des armatures, à la manière connue, un certain nombre de manches filtrantes 5.

Dans le mode de réalisation représenté, il est prévu dans le corps 1 (figure 4) deux alignements 6 de cellules 7 communiquant (figure 2) toutes avec un espace libre central 8.

A leur extrémité inférieure les manches 5 sont fermées et fixées à une structure permettant le libre passage de l'air poussièreux ainsi que des poussières retenues par les manches et devant retomber lors du décolmatage dans la trémie 3.

La partie supérieure du corps 1 est fermée par une tôle rectangulaire 9 à laquelle sont fixée les extrémités supérieures des manches 5.

La tôle 9 est ajourée au droit des manches 5 de façon que l'intérieur de ces dernières communique avec un espace supérieur 10 délimité par une coiffe 11 fixée sur le corps 1.

Dans cet espace 10 qui est bien entendu cloisonné par des prolongements des cloisons 4 jusqu'à la coiffe 11, est disposée dans l'axe de l'installation, une cheminée cylindrique 12 percée de fenêtres 13 communiquant chacune avec l'une des cellules 7 par le canal de cloisons rayonnantes 14 reliées auxdites cloisons intercellulaires 4 ainsi qu'aux parois externes des cellules 7 d'angle.

Les dites fenêtres 13 sont à équidistance les unes des autres excepté un zone dite neutre 15 non percée de la cheminée 12.

L'espace compartimenté 10 communique librement et en permanence avec l'intérieur de la cheminée 12 dont le fond est ouvert.

A la partie inférieure, la cheminée 12 communique ainsi avec un caisson 16 d'évacuation d'air dépoussiéré, lui-même relié à un conduit 17 (figure 2) à un ventilateur-extracteur 18, l'air propre étant rejeté à l'air libre par une sortie 19.

A l'intérieur de la cheminée, sans gêner le passage entre les fenêtres 13 et le caisson d'évacuation 16, est monté un distributeur rotatif d'air de décolmatage de chaque cellule 7 successivement.

Ce distributeur comprend un carter 20 monté mobile autour de l'axe de la cheminée 12 sous l'action d'un système de rotation pas à pas représenté plus en détail sur la figure 3 et désigné sur la figure 2 par la référence générale 21.

Le carter 20 a une forme générale cylindrique et est muni d'un prolongement 20a ouvert à son extrémité, formant bouche de distribution et susceptible d'être amené en regard de chaque fenêtre 13 de manière sensiblement étanche.

Le carter 20 est fermé à sa partie inférieure mais ouvert à sa partie supérieure de façon à assurer la communication en permanence entre l'intérieur du carter 20 et l'atmosphère via un capotage de protection 22 surmontant la coiffe 11.

Le système de rotation pas à pas du carter 20 représenté en figure 3 comprend une roue à rochet 23 entraînant le carter 20, freinée par un frein 24 et entraînée par un système bielle-manivelle 25 mû par un ensemble moto-variateur 26.

Le fonctionnement de l'installation décrite ci-dessus est le suivant.

Le ventilateur-extracteur 18 crée en permanence une dépression dans le corps 1, l'air à dépoussiérer étant admis par le conduit 6' dans la trémie 3.

Les manches 5 de la partie droite de la figure 2 sont représentées en phase de travail cependant que les manches de la partie gauche sont en phase de décolmatage.

En phase travail, les parois des manches 5 sont traversées par le flux d'air dans le sens (flèche 27) extérieur vers l'intérieur.

L'air dépoussiéré de l'intérieur des manches 5 (flèches 28) est aspiré dans l'espace 10 puis le caisson 16 via les fenêtres 13 libres et la cheminée 12, l'air étant ensuite rejeté à l'extérieur en 19.

Les matières solides récupérées dans le filtre sont évacués par une écluse d'air rotative 29 disposée à l'extrémité inférieure de la trémie 3.

Suivant une caractéristique de l'invention, le dispositif de décolmatage présente une position neutre pour laquelle aucune cellule n'est en cours de décolmatage, le filtre étant en fonctionnement à 100 % de sa capacité. Cette position correspond à la mise de la bouche distributrice 20a du carter 20 en regard de ladite zone neutre 15 de la cheminée 12, la totalité des fenêtres 13 étant ainsi dégagées.Lorsque la bouche 20a est amenée par le système de rotation pas à pas de la figure 3 au droit de l'une des fenêtres 13, la cellule 7 intéressée voit le flux d'air qui le traverse s'inverser de sens du fait de la substitution à l'aspiration (flèches 28) exercée dans l'intérieur des manches 5, de la mise à l'atmosphére de l'extrémité supérieure de ladite cellule. La dépression régnant à l'intérieur du corps 1 provoque un flux d'air (flèches 30) provenant de l'extérieur, qui s'engouffre dans les manches 5 et traverse la paroi du média filtrant en sens inverse du sens suivi lors du fonctionnement en filtrage.

On obtient ainsi une mise uniforme et progressive en pression de l'intérieur de l'ensemble des manches 5 de la cellule 7 concernée, ce qui permet un décolmatage efficace et en douceur. Les poussières accumulées à l'extérieur des manches 5 sont décollées progressivement et la longévité du média filtrant s'en trouve augmentée d'autant.

Il est à noter , suivant un avantage très intéressant de l'invention, que l'on peut utiliser comme média filtrant toutes sortes de tissus ou feutres et en particulier des tissus de verre qui, jusqu'à présent, ne supportaient pas les ondes de choc engendrées par l'utilisation pour le décolmatage d'air comprimé injecté.

Il est également à noter que le débit d'air de décolmatage reste constant dans le temps et qu'il est possible de régler ou doser ce débit, ce qui est important, car cela permet de conserver une précouche de particules à la surface du média filtrant contribuant ainsi à la qualité de la filtration. Ce dosage du débit peut s'opérer par exemple en prévoyant un volet réglable obturant plus ou moins l'orifice d'entrée d'air atmosphérique dans le carter 20.

Le procédé de l'invention permet donc un meilleur dépoussiérage et réduit les rejets à l'atmosphére du fait que les médias filtrants conservent une très bonne efficacité, ce qui n'est pas le cas avec un décolmatage à l'air comprimé injecté qui fait subir des contraintes aux tissus et aux feutres filtrants et distant ceux-ci.

Les particules décollées au cours du décolmatage en grande majorité tombent dans la trémie 3, une faible partie étant entraînée par le courant d'aspiration (27) et se redéposant sur d'autres manches 5.

Par ailleurs, les énergies mises en oeuvre pour décolmater sont très largement inférieures à celles nécessaires pour le décolmatage à l'air comprimé.

En effet, le ventilateur extracteur 18 est dimensionné de manière à assurer à la cellule en cours de décolmatage un rinçage efficace et aux autres cellules une dépression suffisante pour un filtrage efficace.

Cette manière de générer le courant de rinçage est très sensiblement plus économique que celle consistant à engendrer par un circuit auxiliaire un flux d'air comprimé.

Suivant une variante de réalisation, on peut avantageusement programmer le cycle de décolmatage, c'est à dire le passage de la bouche distributrice 20a devant successivement chaque cellule 7, sur un tour complet de la roue à rochet 23, le temps de séjour au droit de chaque cellule étant prédéterminé et réglable. Il n'est pas nécessaire d'enchaîner plusieurs cycles à la suite et il est, à cet égard, intéressant de noter que le déclenchement de chaque cycle complet peut ne pas être simplement périodique, mais lié à une variable telle que la perte de charge mesurée entre l'entrée et la sortie du filtre. On peut ainsi par exemple programmer le lancement d'un cycle complet de décolmatage dés que ladite perte de charge mesurée atteint ou dépasse 1000 Pascals. On ménage ainsi le système tout en économisant l'énergie.

Le procédé de l'invention peut s'appliquer à des filtres de morphologie différente de celle illustrée par la figure 1.

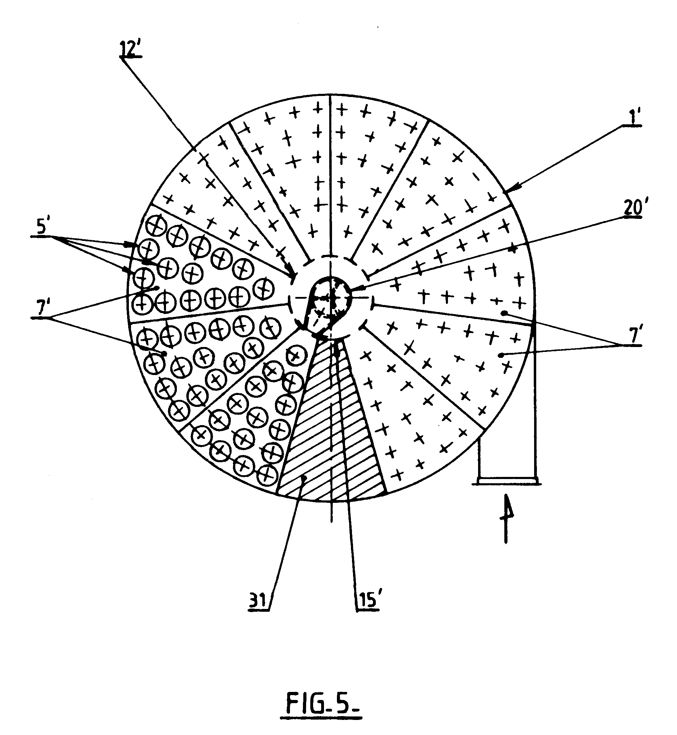

La figure 5 illustre l'application du procédé à un filtre à corps cylindrique 1′ dans lequel les cellules 7′ sont disposées de manière rayonnante autour d'un puits central. La structure cloisonnée du filtre au dessus du corps 1′ et des manches filtrantes 5′ est tout à fait analogue à celle représentée en figure 2 et 4, tout en étant plus simple. Un distributeur cylindrique 20′ identique au dispositif 20, entraîné par les mêmes moyens et disposé dans une cheminée ajourée 12′ identique à la cheminée 12, permet de mettre à l'atmosphére successivement l'extrémité supérieure des cellules 7′ avec une position neutre du distributeur 20′ au droit d'une partie neutre 15′ correspondant à une cellule 31 identique dimensionnellement aux cellules 7′ mais dépourvue de manches filtrantes et inutilisée, si ce n'est pour le passage du conduit de rejet de l'air dépoussiéré.

Enfin, l'invention n'est évidemment pas limitée aux modes de réalisation représentés et décrits ci-dessus mais en couvre au contraire toutes les variantes notamment en ce qui concerne la nature et l'agencement des moyens propres à entraîner en rotation pas à pas le distributeur cylindrique 20, 20′, les formes et dimensions de ce distributeur, des orifices de passage 13, la structure de cloisonnement des cellules filtrantes, en particulier à leur partie supérieure et son raccordement à la cheminée centrale 12, 12′, ainsi que les moyens de réglage du débit d'air de décolmatage.

Il faut noter, de plus, que l'on peut appliquer le procédé de l'invention à des manches filtrantes alimentées en air à dépoussiérer par l'intérieur, à l'extrémité inférieure, l'air de décolmatage étant envoyé dans chaque cellule à l'extérieur des manches et traversant dans l'autre sens la paroi de celles-ci, les structures de montage des manches et de cloisonnement des cellules étant adaptées en conséquence.

## Revendications

1. Procédé de décolmatage automatique pour filtre à air à manches dans lequel on met en dépression une enceinte de filtrage (1) comprenant une pluralité de cellules (7,7') en parallèle comportant chacune au moins une manche filtrante (5,5'), on admet l'air à dépoussiérer à une extrémité de l'enceinte, on extrait l'air dépoussiéré à l'autre extrémité après traversée, dans le sens extérieur-intérieur, de la paroi des manches filtrantes, et on effectue un décolmatage des cellules les unes après les autres, ledit procédé étant caractérisé en ce que, pour chaque cellule (7,7') et pendant un temps prédéterminé, on isole de la source de dépression l'extrémité aval des manches filtrantes (5,5') de ladite cellule et, simultanément, on met en contact l'air atmosphérique avec les surfaces aval des manches en sorte de créer dans la paroi de ces dernières, sans secouage de celle-ci, un rinçage dans le sens intérieur-extérieur.

2. Procédé suivant la revendication 1, caractérisé en ce que le décolmatage s'effectue par cycles déclenchés chacun à partir d'un paramètre lié au degré d'encrassement du filtre.

3. Procédé suivant la revendication 2, caractérisé en ce que le paramètre déclenchant un cycle complet de décolmatage des cellules (7, 7') est la perte de charge mesurée entre l'entrée et la sortie du filtre, lorsque celle-ci atteint ou dépasse un seuil prédéterminé réglable.

4. Dispositif de décolmatage automatique, pour la mise en oeuvre du procédé selon la revendication 1, destiné à des filtres à air du type comprenant un corps (1, 1'), une pluralité de cellules de filtrage en parallèle (7,7') comportant chacune plusieurs manches filtrantes verticales (5,5'), une trémie (3) de réception et évacuation des matières, une conduite (6') d'admission de l'air à dépoussiérer dans ledit corps (1, 1'), à sa partie inférieure, une conduite (16, 17) d'évacuation de l'air dépoussiéré, reliée audit corps, à sa partie supérieure et des moyens (18) pour créer dans ladite conduite (16, 17) une dépression, ledit dispositif de décolmatage étant caractérisé en ce qu'il est constitué d'un carter de distribution (20, 20′) relié à l'atmosphère, entraîné en rotation par des moyens moteurs appropriés (21), muni d'une bouche distributrice (20a) et monté dans une cheminée de distribution cylindrique (12, 12′) disposée à la partie centrale supérieure dudit corps (1, 1′) et comportant des fenêtres (13) de communication, par l'intermédiaire d'un système de cloisonnement approprié (4, 9, 14), avec la partie supérieure de chacune desdites cellules (7, 7′).

5. Dispositif suivant la revendication 4, caractérisé en ce que ledit carter de distribution (20, 20′) communique avec l'atmosphère par l'intermédiaire d'un orifice réglable.

6. Dispositif suivant la revendication 4 ou 5, caractérisé en ce que ladite cheminée (12, 12′) présente une partie ou secteur neutre (15, 15′) au droit de laquelle ladite bouche distributrice (20a) ne communique avec aucune des cellules (7, 7′).

7. Dispositif suivant l'une des revendications 4 à 6, caractérisé en ce que ladite cheminée (12, 12′) communique par lesdites fenêtres (13) et ledit système de cloisonnement (4, 9, 14) avec l'intérieur des manches filtrantes (5, 5′), l'air à dépoussiérer étant admis à l'extérieur de celles-ci.

8. Dispositif suivant l'une des revendications 4 à 7, caractérisé en ce que ladite conduite (16, 17) d'évacuation de l'air dépoussiéré traverse le corps (1, 1′) à sa partie supérieure et débouche à l'extrémité inférieure de ladite cheminée (12, 12′).

9. Dispositif suivant l'une des revendications 4 à 8, caractérisé en ce que lesdits moyens d'entraînement en rotation du carter de distribution (20, 20′) sont constitués par un système d'entraînement pas à pas, éventuellement programmable, chaque pas correspondant à la mise en regard de ladite bouche distributrice (20a) avec l'une desdites fenêtres de communication (13) ou ledit secteur neutre (15, 15′).

## Claims

1. A process for the automatic cleaning of the filters of a bag-type air filter, in which a partial vacuum is produced in a filtering enclosure (1) comprising a number of cells (7,7') disposed in parallel, each one of which is formed from at least one filter bag (5,5'), the air to be filtered enters at one end of the enclosure and the dust-free air is extracted at the other end after having crossed, in the direction from the exterior to the interior, the wall of the filter bags, and the cells are cleaned in turn, the said process being characterised in that, for each cell (7,7') and during a predetermined period of time, the downstream end of the filter bags (5,5') of the said cell is disconnected from the source of the partial vacuum and, simultaneously, atmospheric air comes into contact with the downstream surfaces of the bags in such a way that the wall of the said bags is flushed in the direction from the interior to the exterior, without being shaken.

2. A process as claimed in claim 1, characterised in that the cleaning of the filters is carried out in cycles, each of which is triggered in accordance with a parameter based on the level of clogging of the filter.

3. A process as claimed in claim 2, characterised in that the parameter for triggering a complete cycle of cleaning the filters of the cells (7,7') is the pressure drop measured between the filter input and output, where this reaches or exceeds an adjustable predetermined threshold.

4. An automatic filter cleaning device, for carrying out the process as claimed in claim 1, designed for the type of air filters comprising a body (1,1'), a plurality of filter cells disposed in parallel (7,7'), each formed from several vertical filter bags (5,5'), a hopper (3) for receiving and evacuating the materials, a pipe (6') through which the air to be filtered enters the lower part of the said body (1,1'), a pipe (16,17) for evacuating the dust-free air, which is connected to the upper part of the said body and means (18) for creating a partial vacuum in the said pipe (16,17), the said filter cleaning, device being characterised in that it is formed from a distribution casing (20,20'), connected to the atmosphere, which is rotated by means of suitable motor means (21), equipped with a distribution opening (20a), and mounted in a cylindrical distribution shaft (12,12'), disposed at the upper central part of the said body (1,1') and comprising windows (13) which communicate via a suitable partition system (4,9,14) with the upper part of each of the said cells (7,7').

5. A device as claimed in claim 4, characterised in that the said distribution casing (20,20') is connected to the atmosphere by means of an adjustable hole.

6. A device as claimed in claims 4 or 5, characterised in that the said shaft (12,12') has a neutral part or sector (15,15'), in line with which the said distribution opening (20a) does not communicate with any of the cells (7,7').

7. A device as claimed in any of claims 4 to 6, characterised in that the said shaft (12,12') communicates by means of the said windows (13) and the said partition system (4,9,14) with the interior of the filter bags (5,5'), the air to be filtered being admitted at the outside of the filter bags.

8. A device as claimed in any of claims 4 to 7, characterised in that the said pipe (16,17) for evacuating the dust-free air crosses the upper part of the body (1,1') and emerges at the lower end of the said shaft (12,12').

9. A device as claimed in any of claims 4 to 8, characterised in that the said means of rotating the distribution casing (20,20') are formed from a step-by-step drive system, which may be programmable, each step corresponding to the said distribution opening (20a) being brought opposite one of the said communication windows (13) or the said neutral sector (15,15').

## Patentansprüche

1. Verfahren zum automatischen Reinigen von Luftfilterschläuchen, bei dem man einen Filterbehälter (1), der eine Vielzahl von parallelen Zellen (7, 7') umfaßt, die jeweils wenigstens einen Filterschlauch (5, 5') enthalten, unter Unterdruck setzt, es der Luft gestattet, an einem Ende des Behälters zu entstauben, die entstaubte Luft am anderen Ende nach Durchgang der Wandung der Filterschläuche im Sinne von außen nach innen abführt und eine Reinigung der Zellen nacheinander vornimmt, wobei besagtes Verfahren dadurch gekennzeichnet ist, daß man für jede Zelle (7, 7') und während einer vorbestimmten Zeit von der Unterdruckquelle das stromabwärtige Ende der Filterschläuche (5, 5') besagter Zelle isoliert und gleichzeitig atmosphärische Luft mit den stromabwärtigen Schlauchflächen derart in Kontakt bringt, daß in der Wandung dieser letzteren, ohne diese zu rütteln, eine Spülung im Sinne von innen nach außen erzeugt wird.

2. Verfahren gemäß Anspruch 1, dadurch gekennzeichnet, daß die Reinigung durch Zyklen bewirkt wird, die jeweils durch einen Parameter ausgelöst werden, der mit dem Grad der Verschmutzung des Filters verbunden ist.

3. Verfahren gemäß Anspruch 2, dadurch gekennzeichnet, daß der Parameter, der einen vollständigen Reinigungszyklus auslöst, der Druckverlust gemessen zwischen dem Eingang und dem Ausgang des Filters ist, wenn dieser einen einstellbaren vorbestimmten Schwellenwert erreicht oder überschreitet.

4. Vorrichtung zum automatischen Reinigen zur Durchführung des Verfahrens gemäß Anspruch 1, bestimmt für Luftfilter des Typs umfassend einen Körper (1, 1'), eine Vielzahl von parallelen Filterzellen (7, 7'), die jeweils mehrere vertikale Filterschläuche (5, 5') aufweisen, einen Trichter (3) zur Aufnahme und Abführung von Materialien, eine Leitung (6') zur Zuführung von Luft zum Entstauben in besagten Körper (1, 1') an seinem unteren Teil, eine Leitung (16, 17) zur Abführung entstaubter Luft, die mit besagtem Körper an seinem oberen Teil verbunden ist, und Mittel (18) zum Erzeugen eines Unterdrucks in besagter Leitung (16, 17), wobei besagte Reinigungsvorrichtung dadurch gekennzeichnet ist, daß sie gebildet wird von einem Verteilergehäuse (20, 20'), das mit der Atmosphäre verbunden ist, durch geeignete motorische Mittel (21) in Rotation versetzt, mit einer Verteileröffnung (20a) versehen und in einem zylindrischen Verteilungsschacht (12, 12') montiert ist, der im mittleren oberen Teil des besagten Körpers (1, 1') angeordnet ist und Öffnungen (13) zum Verbinden mit dem oberen Teil jeder der besagten Zellen (7, 7') über ein geeignetes Verschlußsystem (4,9,14) aufweist.

5. Vorrichtung gemäß Anspruch 4, dadurch gekennzeichnet, daß besagtes Verteilergehäuse (20, 20') über eine einstellbare Öffnung mit der Atmosphäre in Verbindung steht.

6. Vorrichtung gemäß Anspruch 4 oder 5, dadurch gekennzeichnet, daß besagter Schacht (12, 12') einen neutralen Abschnitt oder Sektor (15, 15') aufweist, in dem besagte Verteileröffnung (20a) nicht mit irgendeiner der Zellen (7, 7') in Verbindung steht.

7. Vorrichtung gemäß einem der Ansprüche 4 bis 6, dadurch gekennzeichnet, daß besagter Schacht (12, 12') über besagte Fenster (13) und besagtes Verschlußsystem (4, 9, 14) mit dem Inneren von Filtersäcken (5, 5') in Verbindung steht, wobei zu entstaubende Luft nach außen von diesen zugeführt wird.

8. Vorrichtung gemäß einem der Ansprüche 4 bis 7, dadurch gekennzeichnet, daß besagte Leitung (16, 17) zum Abführen entstaubter Luft durch den Körper (1, 1') in seinem oberen Abschnitt führt und am unteren Ende des besagten Schachtes (12, 12') mündet.

9. Vorrichtung gemäß einem der Ansprüche 4 bis 8, dadurch gekennzeichnet, daß besagte Mittel zum Versetzen des Verteilergehäuses (20, 20') in Rotation durch ein gegebenenfalls programmierbares System zum Antreiben Schritt für Schritt gebildet wird, wobei jeder Schritt dem zur Deckung Bringen besagter Verteileröffnung (20a) mit einem der besagten Verbindungsfenster (13) oder besagtem neutralem Sektor (15, 15') entspricht.
